Europäisches Patentamt

European Patent Office

Office européen des brevets

(11) Publication number: **0 130 806**
**B1**

## EUROPEAN PATENT SPECIFICATION

(45) Date of publication of patent specification: 03.06.87

(51) Int. Cl.⁴: **F 16 H 1/42**

(21) Application number: **84304420.7**

(22) Date of filing: **28.06.84**

(54) **Differential mechanism.**

(30) Priority: **01.07.83 GB 8317911**

(43) Date of publication of application:
**09.01.85 Bulletin 85/02**

(45) Publication of the grant of the patent:
**03.06.87 Bulletin 87/23**

(84) Designated Contracting States:
**AT BE CH DE FR GB IT LI LU NL SE**

(56) References cited:
**CH-A- 237 300**
**FR-A-2 126 823**
**GB-A-1 099 717**
**GB-A-1 168 895**
**GB-A-1 372 971**
**US-A-3 406 593**
**US-A-3 738 192**

**Design Practices, Automatic Transmission -
SAE Warrendale**

(73) Proprietor: **Quaife, Rodney Trevor
Sovereign Way Botany Industrial Estate
Tonbridge Kent TN9 1RJ (GB)**

(72) Inventor: **Quaife, Rodney Trevor
Sovereign Way Botany Industrial Estate
Tonbridge Kent TN9 1RJ (GB)**

(74) Representative: **Prentice, Raymond Roy
R.R. Prentice & Co. 34 Tavistock Street
London WC2E 7PB (GB)**

Courier Press, Leamington Spa, England.

## Description

This invention relates to differential mechanisms.

As is well known to those skilled in the art, when a vehicle turns a corner, the driven road wheels of the vehicle rotate at different speeds since the wheel on the inside of the curve has to travel a shorter distance than the wheel on the outside of the curve. For this reason, the drive shaft from the vehicle engine cannot be coupled directly to a continuous axle carrying the driven road wheels but must instead be coupled to a differential gear mechanism which drives two separate half shafts each carrying a respective wheel. In this manner the wheels can be driven at different speeds of rotation.

The vehicle drive shaft which forms a connection from the gear box or transmission case is provided with a bevel pinion which engages with a larger bevel gear wheel called a crown wheel. In one form of conventional differential gear mechanism, the crown wheel is rotatably mounted on one of the half shafts and is secured to a box or casing in which differential pinions are mounted. When the box or casing rotates as a result of rotation of the crown wheel to which it it secured, the differential pinions whose shafts are rotatably mounted in the box or casing, will be carried round with the box or casing on their respective shafts.

When the vehicle is travelling straight ahead, the box or casing rotates but the differential pinions will not rotate on their shafts. These pinions are engaged with bevel gears which are rigidly connected to the inner ends of the half shafts so that the latter rotate at the same speed. When the vehicle goes round a corner, one half shaft rotates at a slower speed than the other and the differential pinions now rotate on their respective shafts in the box or casing with the result that they retard rotation of the bevel wheel of the said one half shaft and at the same time accelerate the bevel wheel of the other half shaft.

A disadvantage of such conventional differential mechanisms is that they permit one of the driven wheels to spin if that wheel has relatively less tractive ability, such as occurs under conditions of ice or mud, than the other wheel. The total tractive ability of the vehicle is then limited to only one wheel.

It has previously been proposed to overcome this disadvantage by a construction as shown, for example, in GB—A—1099717 in which a differential mechanism comprises a rotatable differential casing containing two side gears each of which is engageable with a respective half shaft, a first set of planetary pinions in meshing engagement with one of the side gears and a second set of planetary pinions in meshing engagement with the other of the side gears. Adjacent pinions of the first and second sets of planetary pinions were arranged to mesh with one another so that each pinion of one set was in meshing engagement with two adjacent pinions of the other set. In this manner, the planetary pinions meshed with each other in what was described as "a full circle".

In one construction shown in GB—A—1099717, the planetary pinions were located in pockets in a housing support and meshed with internally-toothed ring gears which were connected to the half shafts. The housing was provided with a ring gear arranged to mesh with a vehicle drive shaft and torque transmitted through the differential mechanism introduced gear tooth loads on the pinions which caused increasing frictional force as the torque increased. A certain amount of wear took place between the teeth of the pinions and the walls of the pockets in the housing in which the pinions were located. However, owing to centrifugal force, the planetary pinions were urged radially outwardly against the teeth of the internally-toothed ring gears. Such an arrangement is likely to lead to excessive wear of the engaging teeth which in turn is likely to lead to a short life of the differential mechanism and risk of breakdown. Further, the arrangement involves a complex and complicated structure and as far as is known was never marketed commercially.

A somewhat simpler arrangement has been proposed in GB—A—1372971 in which the planetary pinions are arranged outside centrally located side gears. However, in this case, each planetary pinion of one set was arranged to mesh with only one planetary pinion of the other set. The planetary pinions were thus arranged in discrete pairs with the pinions of each pair being independent of the pinions of the other pairs. The pinions were journalled in pockets in a housing which surrounded the side gears. However, with this arrangement, the individual pinions are subjected to different rates of wear and at some stages take the whole force of the transmission since they are not in a full circle engagement with the other pinions.

Another arrangement is disclosed in U.S. A 3738192 in which two sets of planetary pinions are arranged to mesh with respective sun gears and, to a limited axial extent, each planetary pinion of one set meshes with adjacent planetary pinions of the other set. However, the planetary pinions are not journalled in pockets and are thus not positively located in the casing.

A similar arrangement is disclosed in GB—A—1168895 and in this case springs are provided which act against the two sets of planetary pinions to urge said pinions axially away from each other and a further spring is provided to urge the sun gears axially away from each other. This further spring is, however, free to rotate with the sun gears.

The present invention aims to provide a differential mechanism which overcomes or at least substantially reduces the disadvantages inherent in the above-described arrangements.

According to the invention, there is provided a differential mechanism comprising a casing, a pair of sun gears rotatably mounted in the casing, each said sun gear being adapted to be connected to a respective half shaft of a vehicle transmission, a first set of planetary pinions arranged to surround and to be in meshing engagement with one of the sun gears and a second set of planetary pinions arranged to surround and to be in meshing engagement with the other of the sun gears, the two sets of planetary pinions being in meshing engagment with each other, the sun gears and planetary pinions being provided with helical teeth and the planetary pinions being journalled in respective pockets provided in the casing with each pocket for one set of pinions intersecting two adjacent pockets for the other set of pinions whereby each pinion of one of the sets of planetary pinions meshes with two adjacent pinions of the other set of planetary pinions so that the planetary pinions mesh with each other in a full circle surrounding the sun gears, characterised in that the axially facing inner ends of the sun gears are separated by thrust means comprising a pair of thrust pads containing springs in the from of discs which serve to urge the sun gears away from each other in an axial direction, the thrust pads being prevented from rotation with respect to the casing.

By means of the arrangement according to the invention, forces and stresses are shared equally by all of the intermeshing planetary pinions and the maximum wear will take place to the pockets in the casing in which the pinions are journalled since the material of the casing is less hard than that of the pinions which will normally be made of hardened steel. Such wear to the pockets is not detrimental to the operation or efficiency of the differential and is unlikely to lead to breakdown during use. Moreover, by providing simple holes or pockets in the casing, in which the constantly meshing planetary pinions are journalled, it is possible to provide a differential mechanism having maximum performance at minimum cost and which is likely to have a longer life because of more even wear.

According to one embodiment of the invention, the helical teeth are so arranged on the sun gears that, in normal operation, the sun gears are urged axially towards each other when the casing is rotating and the associated sets of planetary pinions are urged away from each other in an axial direction. Preferably, thrust plates are provided at the ends of the casing against which the ends of respective sets of planetary pinions are arranged to bear. The thrust plates are desirably made of a friction material.

Each sun gear is preferably internally splined for receiving the splined end of a respective half shaft. This arrangement permits axial movement of the sun gear on the associated half shaft while preventing relative rotational movement.

In one embodiment of the invention, twelve planetary pinions are provided, six in each set. In another embodiment, ten planetary pinions are provided, five in each set.

The invention will now be further described, by way of example, with reference to the drawings, in which:—

Fig. 1 is a section through one embodiment of a differential mechanism according to the invention taken on the line I—I in Fig. 2;

Fig. 2 is a section through the mechanism shown in Fig. 1 taken on the line II—II in that figure;

Fig. 3 is an exploded perspective view of parts of a second embodiment of a differential mechanism according to the invention;

Fig. 4 is a section through a third embodiment of a differential mechanism according to the invention taken on the line IV—IV in Fig. 5; and

Fig. 5 is a section through the mechanism shown in Fig. 4 taken on the line V—V in that figure.

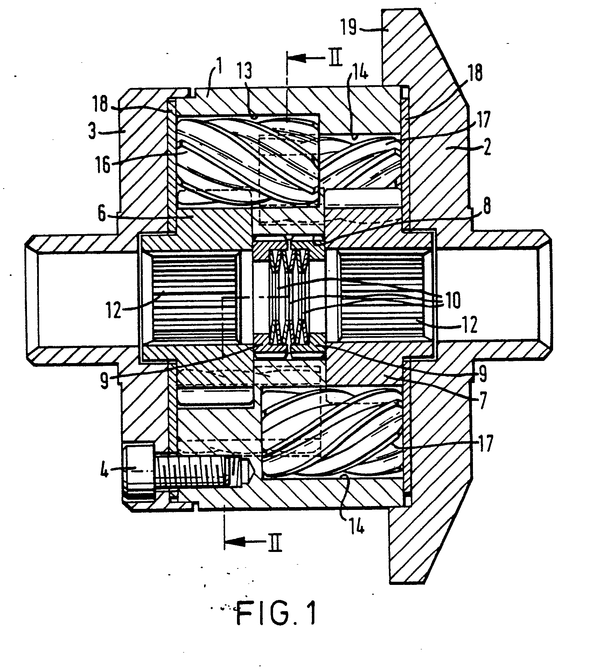

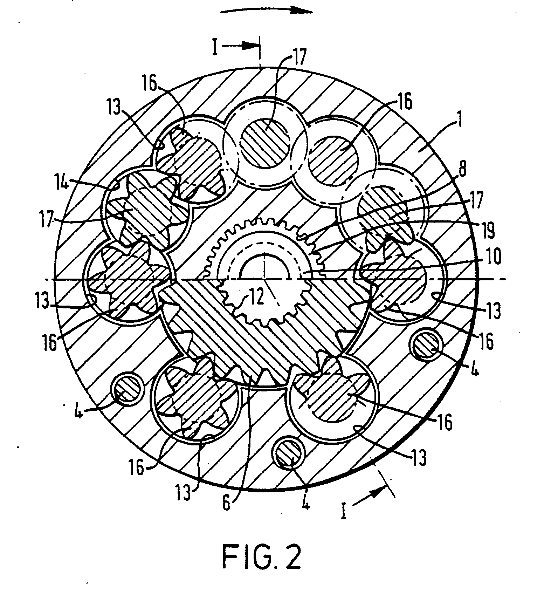

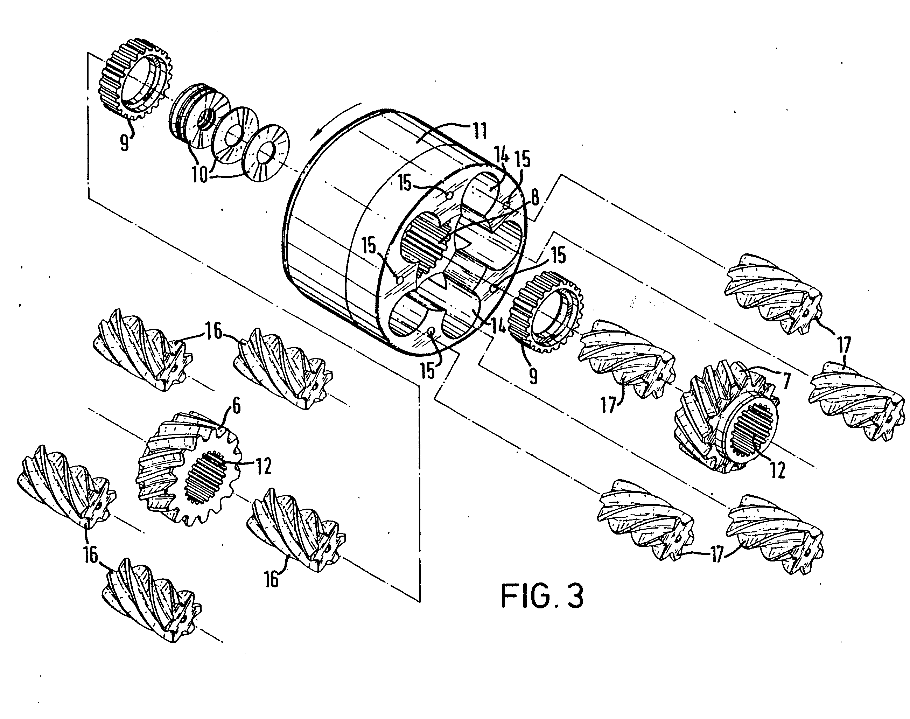

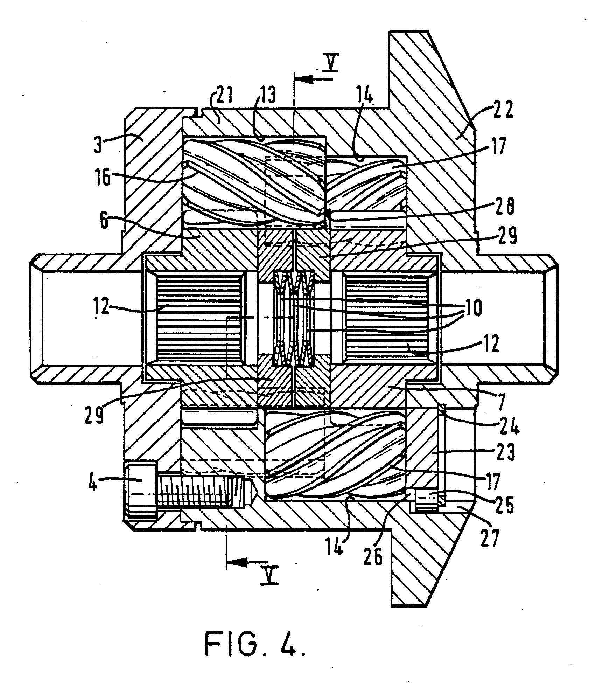

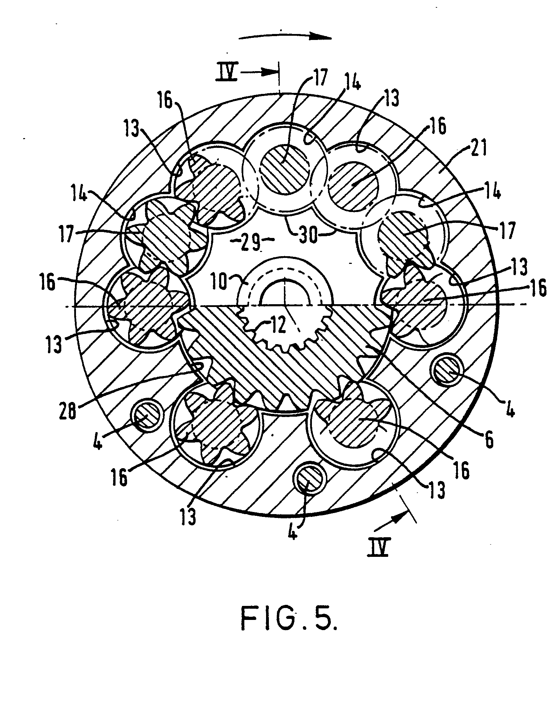

The embodiments shown in the drawings are basically similar except that the embodiments shown in Figs. 1 and 2 and in Figs. 4 and 5 of the drawings each have twelve planetary pinions while the embodiment shown in Fig. 3 of the drawings has only ten planetary pinions. In the drawings, like parts are denoted by like reference numerals.

Reference will first be made to Figs. 1 and 2 of the drawings in which the differential mechanism comprises a casing 1 and a pair of flanged end cover plates 2 and 3. One end of the casing 1 and the end cover plate 3 are provided with aligned bores for the reception of fixing bolts 4. Similarly, the other end of the casing and the end cover plate 2 are also provided with aligned bores for the reception of similar fixing bolts (not shown). The bores in the casing 1 are screw-threaded for engagement with the threads of the fixing bolts.

The casing 1 is further provided with a pair of axially aligned bores each adapted to receive a respective sun gear 6, 7 and interconnected by a central bore 8 of reduced diameter. A pair of thrust pads 9 are mounted in this central bore and are urged by Belleville type disc springs 10 against the inner or facing end faces of the sun gears 6 and 7. The central bore 8 is splined and the thrust pads 9 are similarly splined to engage with the splines of the bore 8 in order to prevent relative rotation between said thrust pads.

The sun gear 6 is provided with helical teeth having a right-hand helix as viewed from the outer end of the casing to which the end plate 3 is secured. Similarly, the sun gear 7 is provided with helical teeth having a left-hand helix as viewed from the outer end of the casing to which the end plate 2 is secured. Both of the sun gears are internally splined as indicated by the splines 12 for receiving and engaging with the splined end of a respective half shaft (not shown).

The casing 1 further contains a first series of six cylindrical pockets 13 extending from one end for accommodating a first set of planetary pinions 16 and a second series of six cylindrical pockets 14 extending from the other end for accommodating a second set of planetary pinions 17. The pinions 16 are provided with helical teeth having a left-hand helix and are arranged to mesh with the teeth of the sun gear 6. The pinions 17 are provided with helical teeth having a right-hand helix and are arranged to mesh with the teeth of the sun gear 7. Each pinion 16 is also arranged to mesh with two adjacent pinions 17 and, similarly, each pinion 17 is arranged to mesh with two adjacent pinions 16 to that all of the pinions are in mesh in a full circle surrounding the sun gears 6 and 7 as shown in Fig. 2. Further, each pocket 13 intersects two adjacent pockets 14 and similarly each pocket 14 intersects two adjacent pockets 13 again as shown in Fig. 2 of the drawings.

Clamped between the ends of the casing 1 and the end plates 2 and 3 are a pair of thrust plates 18 against which the outer ends of the sun gears 6 and 7 are urged by the springs 10. The outer ends of the planetary pinions are also urged against the thrust plates 18 when the differential mechanism is in operation. The end cover plate 2 is provided with a flange 19 adapted to be connected to a crown wheel (not shown). The casing is normally mounted to be driven by the crown wheel 19 in a clockwise direction of rotation as indicated by the curved arrow in Fig. 2.

In the embodiment shown in Fig. 3 of the drawings, the casing 11, which is similar to the casing 1, has only five pockets 14 at one end for receiving respective planetary pinions 17 and five pockets at the other end for receiving respective planetary pinions 16.

Similarly, only five threaded bores 15 are provided at each end of the casing 1 for receiving respective bolts 4 (see Fig. 1). This embodiment is otherwise similar in ever respect to the embodiment shown in Figs. 1 and 2 of the drawings. However, it should be noted that the casing 11 is viewed from the front as it would be located on the rear axle of a vehicle so that the direction of rotation in the forward direction of movement of the vehicle is anti-clockwise as indicated by the curved arrow in Fig. 3.

The embodiment shown in Figs. 4 and 5 of the drawings is basically similar to the embodiment shown in Figs. 1 and 2 of the drawings except that in this case the casing 21 is formed integrally with the crown wheel 22. Both the unitary casing 21 and crown wheel 22 and the end plate 3 are case-hardened so that thrust plates can be dispensed with, the outer ends of the sun gears 6 and 7 bearing directly against the end plate 3 and crown wheel 22 respectively. This arrangement facilitates assembly of the mechanism.

Since the casing 21 does not have a separable end plate at each end, both of the sun gears 6 and 7 must be inserted into the casing from the end to which the end plate 3 is secured by screws or bolts 4. Accordingly, the casing is provided with a central smooth bore 28 which is of uniform diameter throughout. The sun gear 7 will normally be inserted into the bore 28 first followed by a spring pack assembly consisting of a pair of thrust pads 29 which house Belleville type disc springs 10. The second sun gear 6 is then inserted into the central bore 28 and the first set of planetary pinions 16 are inserted into a first series of cylindrical pockets 13 extending into the casing. The end plate 3 can then be fitted to the end of the casing 21 and secured by the screws or bolts 4.

The second set of planetary pinions 17 are inserted into a second series of cylindrical pockets 14 which extend through the crown wheel 22 into the casing 21 at the other end thereof. Once the planetary pinions 17 have been inserted into their respective pockets 14, each pocket is closed by a respective thrust pad 23 which is retained in place by a spring circlip 24. Each thrust pad 23 is prevented from rotating relative to the casing 21 and crown wheel 22 by a key or dowel pin 25 which engages in keyways 26 and 27 provided respectively in the thrust pad 23 and in the crown wheel 22.

In order to prevent the thrust pads 29 from rotating relative to one another, each is provided around its periphery with a series of scallops or arced recesses 30 as shown in Fig. 5 of the drawings. These recesses are contiguous with the cylindrical pockets 13 and 14 in the casing 21 so that the periphery pinions 16 and 17 will prevent the thrust pads 29 from rotating relative to each other or relative to the casing 21.

As in the previous embodiments, the sun gears 6 and 7 and the planetary pinions 16 and 17 are provided with intermeshing helical teeth, the sun gear 6 and the pinions 17 having a right-hand helix and the sun gear 7 and the pinions 16 having a left-hand helix.

In all three embodiments, torque applied to the crown wheel will rotate the casing 1, 11 or 21 in the direction indicated by the curved arrows in Figs. 2, 3 and 5. This torque is distributed through two torque paths by the meshing of the planetary pinions 16 and 17. Radial gear tooth load is imparted to the pinions which results in frictional resistanace and introduces a torque bias. The helical teeth on the pinions and sun gears serve to produce a thrust force on the pinions which causes frictional resistance by virtue of the engagement of the pinions with the pockets in the casing in which they are located. A thrust force is also imparted to the sun gears 6 and 7 by the axial gear tooth loading on these gears. The helixes are so arranged on the sun gears that rotation of the casing causes the sun gears 6 and 7 to move towards one another against the force of the springs 10. At the same time, the planetary pinions 16 and 17 are forced outwardly against the thrust plates 18 or against the end plate 3 and thrust pads 23 in the case of the embodiment shown in Figs. 4 and 5.

In the event of one of the wheels tending to spin, the associated sun gear 6 or 7 will tend to move axially outwards in the casing but the springs 10 will ensure that frictional resistance is maintained. At the same time, the axial movement of the sun gear will tend to move the planetary pinions, in meshing engagement therewith, axially inwards towards the other set of planetary pinions. The friction between the sets of planetary pinions will therefore be increased. It has been found that, in practice, the differential mechanism according to the invention largely prevents wheel spin except under extreme conditions and it is believed that it is the novel arrangement of the helical gears and pinions and the provision of the springs which achieves this marked improvement in performance over the previously-known differentials.

The casing will normally be filled with a suitable lubrication oil to prevent overheating.

The invention is not restricted to the above-described embodiments. For example, each set of planetary pinions may consist of more or less than five or six pinions as in the above-described embodiments. The casing will, of course, be provided with a corresponding number of pockets for receiving the sets of planetary pinions.

## Claims

1. A differential mechanism comprising a casing, a pair of sun gears rotatably mounted in the casing, each said sun gear being adapted to be connected to a respective half shaft of a vehicle transmission, a first set of planetary pinions arranged to surround and to be in meshing engagement with one of the sun gears and a second set of planetary pinions arranged to surround and to be in meshing engagement with the other of the sun gears, the two sets of planetary pinions being in meshing engagement with each other, the sun gears and planetary pinions being provided with helical teeth and the planetary pinions being journalled in respective pockets provided in the casing with each pocket for one set of pinions intersecting two adjacent pockets for the other set of pinions whereby each pinion of one of the sets of planetary pinions meshes with two adjacent pinions of the other set of planetary pinions so that the planetary pinions mesh with each other in a full circle surrounding the sun gears, characterised in that the axially facing inner ends of the sun gears are separated by thrust means comprising a pair of thrust pads containing springs in the form of discs which serve to urge the sun gears away from each other in an axial direction, the thrust pads being prevented from rotation with respect to the casing.

2. A differential mechanism according to claim 1, wherein the helical teeth are so arranged on the sun gears that, in normal operation, the sun gears are urged axially towards each other when the casing is rotating and the associated sets of planetary pinions are urged away from each other in an axial direction.

3. A differential mechanism according to claim 2, wherein thrust plates are provided at the ends of the casing against which the ends of respective sets of planetary pinions are arranged to bear.

4. A differential mechanism according to claim 3, wherein the thrust plates are made of a friction material.

5. A differential mechanism according to any preceding claim, wherein each sun gear is internally splined for receiving the splined end of a respective half shaft whereby relative axial movement is permitted but relative rotational movement is prevented.

## Patentansprüche

1. Differentialgetriebe mit einem Gehäuse (1, 21) und einem Paar von Sonnenrädern (6, 7), welche drehbar in dem Gehäuse angeordnet sind, wobei jedes Sonnenrad (6, 7) dazu bestimmt ist, mit einer Hälfte einer Welle eines Fahrzeuggetriebes verbunden zu werden, mit einem ersten Satz von Planetenrädern (16), die so angeordnet sind, daß sie eines der Sonnenräder (6) umkreisen und in Zahneingriff mit ihm stehen, mit einem zweiten Satz von Planetenrädern (17), die so angeordnet sind, daß sie das andere der Sonnenräder (7) umkreisen und in Zahneingriff mit ihm stehen, wobei die beiden Sätze von Plantenrädern (16, 17) miteinander in Zahneingriff stehen und die Sonnenräder (6, 7) und Planetenräder (16, 17) mit einer Schraubenzahnung versehen sind, wobei die Planetenräder (16, 17) sich achsgelagert in entsprechenden Kammern (13, 14) befinden, welche in dem Gehäuse (1) vorgesehen sind, wobei jeweils eine Kammer (13 bzw. 14) des einen Satzes von Planetenrädern (16 bzw. 17) zwei benachbarte Kammer (13 bzw. 14) des anderen Satzes von Rädern (16 bzw. 17) überschneidet und jedes Rad des einen der Planetenrädersätze (16 bzw. 17) in Zahneingriff mit zwei benachbarten Rädern des anderen Planetenradsatzes (16 bzw. 17) steht, so daß die Planetenräder im vollen Kreis um die Sonnenräder (6, 7) herum miteinander in Eingriff stehen, dadurch gekennzeichnet, daß die zueinander gewandten inneren Stirnflächen der Sonnenräder (6, 7) durch eine Druckeinrichtung voneinander getrennt sind, welche aus einem Paar von Druckstücken (9, 29) besteht, die zwischen sich Federn (10) in Form von Tellern aufnehmen, welche dazu dienen, die Sonnenräder (6, 7) voneinander in axialer Richtung auseinander zu bewegen, wobei die Druckstücke (9, 29) bezogen auf das Gehäuse (1) von der Drehung ausgenommen sind.

2. Differentialgetriebe nach Anspruch 1, dadurch gekennzeichnet, daß die Schraubenzahnungen auf den Sonnenrädern (6, 7) so angeordnet sind, daß beim normalen Betrieb die Sonnenräder (6, 7) axial zueinander getrieben werden, wenn das Gehäuse (1) dreht, und die zugeordneten Planetenrädersätze (16, 17) in axialer Richtung voneinander wegbewegt werden.

3. Differentialgetriebe nach Anspruch 2, dadurch gekennzeichnet, daß Druckplatten (18) am Ende des Gehäuses vorgesehen sind, gegen welches sich die Stirnflächen von den jeweiligen Planetenrädersätzen (16, 17) abstützen.

4. Differentialgetriebe nach Anspruch 3, dadurch gekennzeichnet, daß die Druckplatten (18) aus einem Reibwerkstoff bestehen.

5. Differentialgetriebe nach einem der vorhergehenden Ansprüche, dadurch gekennzeichnet, daß jedes Sonnenrad (6, 7) innen mit Keilnuten (12) zur Aufnahme von dem mit Keilnuten versehenen Ende der jeweiligen Wellenhälfte versehen ist, so daß eine relative axiale Bewegung beider Teile zueinander erlaubt, eine relative Drehbewegung verhindert ist.

**Revendications**

1. Mécanisme différentiel comprenant un carter, une paire de roues planétaires montées de manière à pouvoir tourner dans le carter, chaque roue planétaire étant conçue pour. être reliée à un demi-arbre respectif d'une transmission de véhicule, une premier jeu de satellites disposés pour entourer l'une des roues planétaires et être en coopération d'engrènement avec elle et un deuxième jeu de satellites disposés pour entourer l'autre des roues planétaires et être en coopération d'engrènement avec elle, les deux de satellites étant en coopération d'engrènement entre eux, les roues planétaires et les satellites étant munis de dentures hélicoïdales et les satellites étant montés dans des poches respectives prévues dans le carter, chaque poche destinée à un jeu de pignons coupant deux poches adjacentes destinées à l'autre jeu de pignons de sorte que chaque pignon de l'un des jeux de satellites engrène avec deux pignons adjacents de l'autre jeu de satellites, de sorte que les satellites engrènent entre eux en un cercle complet et entourant les roues planétaires, caractérisé en ce que les extrémités intérieures tournées axialement des roues planétaires sont séparées par des moyens de poussée comprenant une paire de patins de poussée contenant des ressorts sous la forme de disques qui servent à pousser les roues planétaires à s'éloigner l'une de l'autre dans une direction axiale, les patins de poussée étant empêchés de tourner relativement au carter.

2. Mécanisme différentiel selon la revendication 1, dans lequel les dents hélicoïdales sont disposées de telle sorte sur les roues planétaires qu'en fonctionnement normal, les roues planétaires sont poussées axialement l'une vers l'autre quand le carter tourne et les jeux de satellites associés sont poussés à s'éloigner l'un de l'autre dans une direction axiale.

3. Mécanisme différentiel selon la revendication 2, dans lequel des plaques de poussée sont prévues aux extrémités du carter contre lesquelles les extrémités des jeux respectifs de satellites sont disposées pour s'appuyer.

4. Mécanisme différentiel selon la revendication 3, dans lequel les plaques de poussée sont formées d'une matière de friction.

5. Mécanisme différentiel selon l'une quelconque des revendications précédentes, dans lequel chaque roue planétaire est cannelée intérieurement pour recevoir l'extrémité cannelée d'un demi-arbre respectif de sorte qu'un mouvement axial rotatif est permis mais qu'un mouvement de rotation relative est empêché.

FIG. 1

FIG. 2

0 130 806

FIG. 3

FIG. 4.

4

FIG.5.